# EUROPÄISCHE PATENTSCHRIFT

(11) **EP 0 423 815 B1**
(45) Veröffentlichungstag und Bekanntmachung des Hinweises auf die Patenterteilung: **21.04.1993**
(21) Anmeldenummer: 90120100.4
(22) Anmeldetag: 19.10.1990
(51) Int. Cl.: B60R 9/058

(54) **Befestigung eines Stützfusses eines Dachgepäckträgers**
Mounting of a roof rack support
Fixation d'un pied d'appui d'une galerie de toit

(30) Priorität: 19.10.1989 DE 3934886
(43) Veröffentlichungstag der Anmeldung: 24.04.1991
(73) Patentinhaber: silvretta-sherpas Sportartikel GmbH, D-85757 Karlsfeld (DE)
(72) Erfinder: Eugler, Norbert, W-8047 Karlsfeld (DE)
(74) Vertreter: Zmyj, Erwin, Dipl.-Ing., Dipl.-Wirtsch.-Ing.

(56) Entgegenhaltungen:
- EP-A- 0 278 435
- DE-A- 2 950 643
- US-A- 4 021 991

## Beschreibung

Die Erfindung bezieht sich auf eine Befestigung eines Stützfußes eines Dachgepäckträgers bei einer Kraftfahrzeugkarosserie mit Regenrinne und einer Gewindebuchse im Dachblech für die Befestigung des Dachgepäckträgers mittels einer Schraube.

Bei einer bekannten Befestigung dieser Art (DE-C 3 050 024) ist mittels der Befestigungsschraube ein Abstützbeschlag festgelegt, der zur Abstützung des Stützfußes und zur Aufnahme eines Verriegelungsgliedes mit einem nach außen abstehenden Stützflansch versehen ist, der wegen der Aufnahmemöglichkeit des Stützfußes und des Verriegelungsgliedes verhältnismäßig weit vom Dach absteht, so daß entweder im Dachbereich eine Einbuchtung ausgebildet werden oder ein verhältnismäßig großer Abstand zwischen Türrahmen und Dachblech verbleiben muß. Da der Stützfuß nicht unmittelbar am Dach befestigt, sondern am Abstützbeschlag abgestützt und mittels des Verriegelungsgliedes festgelegt ist, ist nicht nur der bauliche Aufwand erhöht, sondern auch die Starrheit dieser Befestigungsanordnung und damit die Belastbarkeit des Dachträgers nachteilig beeinflußt.

Aufgabe der Erfindung ist es, eine Befestigung eines Stützfußes eines Dachgepäckträgers zu schaffen, die nur wenig Platz beansprucht, mit wenigen Bauteilen auskommt und damit einfach im Aufbau ist, sowie eine sichere und starre Befestigung des Dachgepäckträgers an der Kraftfahrzeugkarosserie ermöglicht, wobei die Festlegung des Stützfußes aufgrund der Einfachheit der Befestigung leicht und schnell durchgeführt werden kann.

Diese Aufgabe wird ausgehend von der im Oberbegriff des Anspruches 1 angegebenen Ausgestaltung durch die im kennzeichnenden Teil des Anspruches 1 angegebenen Mittel gelöst.

Durch die Ausbildung der Stützflächen ist für das Klemmstück ein konischer Klemmsitz geschaffen, so daß durch das Zusammenwirken der Stützflächen mit den Klemmflächen des Klemmstückes der Stützfuß nach unten gegen die Regenrinne und gegen das Dachblech gedrückt wird. Hierdurch ist der Stützfuß, der eine entsprechend lange Auflagefläche auf der Regenrinne aufweisen kann, kippsicher an der Karosserie gehalten. Da die Stützflächen nur wenig vom Stützfuß abstehen, kommt man mit einem geringen Platzbedarf aus. Der Stützfuß kann dabei aus einem verhältnismäßig dünnen Blech mit einer Stärke von wenigen Millimetern ausgeführt sein, so daß es nur eines geringes Spaltes zwischen dem Dachblech und dem Türrahmen bedarf. Die Festigkeit des Stützfußes ist dennoch gewährleistet, weil er nur in dem vom Türrahmen überdeckten Bereich dünn ausgeführt werden muß, während er außerhalb des Türrahmens als stabiles dickeres Profil ausgebildet sein kann. Bei dieser Ausgestaltung ist außer der Befestigungsschraube kein zusätzliches Verriegelungsglied und keine zusätzliche Schraubbefestigung notwendig, so daß sich eine in sich stabile Anordnung ergibt, die wenig Platz benötigt und rasch an der Karosserie befestigt werden kann. Es ist dabei nicht notwendig Ausbuchtungen im Dach vorzusehen oder einen großen Spalt zwischen Türrahmen und der Dachkonstruktion zu belassen. Ausbuchtungen im Dachbereich weisen den Nachteil auf, daß sie bei Nichtverwendung des Dachgepäckträgers durch Füllstücke ausgefüllt werden müssen, um die durchgehende Dachform wieder herzustellen. Diese Füllstücke sind insofern unpraktisch, als sie während des Gebrauchs des Dachgepäckträgers abgenommen und gesondert aufgehoben werden müssen, wodurch die Gefahr besteht, daß sie verloren gehen oder daß der Benutzer vergißt, diese Füllstücke nach der Abnahme des Dachgepäckträgers wieder einzusetzen.

Eine einfache Ausgestaltung des Stützfußes ergibt sich in Weiterbildung der Erfindung dadurch, daß die Stützflächen an Klemmklötzen ausgebildet sind, die an gegenüberliegenden Seiten der Stützfußöffnung am Stützfuß befestigt sind. Hierdurch können genau bearbeitete Stützflächen ausgeführt werden, ohne daß teure Prägewerkzeuge mit den entsprechend großen Pressen notwendig wären, deren Einsatz erst bei sehr großen Stückzahlen unter Umständen gerechtfertigt wären.

Eine maßgenaue Anordnung der Klötze am Stützfuß wird in vorteilhafter Weiterbildung der Erfindung dadurch erreicht, daß die Klemmklötze mit der Dicke des Stützfußes angepaßten Ansätzen in die Stützfußöffnung eingreifen. Aufgrund dieses Formschlusses können die Klemmklötze mittels einer einzigen außerhalb der Symmetrielinie des jeweiligen Klemmklotzes geordneten Schraube oder Niet befestigt werden.

Wenn in vorteilhafter Weiterbildung der Erfindung die Stützflächen in Richtung auf das Stützfußende einen Winkel von 60° untereinander einschließen, so wird hierdurch nicht nur eine ausreichende Kraftkomponente in Richtung des Stützfußendes zur Anpressung desselben gegen die Regenrinne erzeugt, sondern auch eine ausreiched stabile Anpressung des Stützfußes gegen das Dachblech erzielt. Außerdem wird hierdurch die Voraussetzung für eine weitere vorteilhafte Ausgestaltung der Erfindung geschaffen, die darin besteht, daß das Klemmstück drei Klemmflächen mit in Umfangsrichtung des Klemmstückes gleicher Längenausdehnung aufweist, die untereinander jeweils einen Winkel von 60° einschließen. Dieses Klemmstück ist symmetrisch mit gleichen Seitenlängen, woraus sich keine bestimmte Einbaulage ergibt, wie dies bei einem asymmetrischen Klemmstück der Fall ist.

Selbstverständlich kann das Klemmstück auch asymmetrisch ausgeführt sein, wobei es dann nur zwei Klemmflächen entsprechend den Stützflächen aufweist. Diese Ausgestaltung wird dann bevorzugt, wenn in der Höhe nur wenig Platz zur Verfügung steht.

Wenn gemäß einer weiteren vorteilhaften Ausgestaltung der Erfindung die Fläche der Stützfußöffnung größer als die Fläche des Klemmstückes in Draufsicht ist und in der Betriebsstellung die Ränder der Stützfußöffnung parallel zu den Rändern des Klemmstückes verlaufen, so besteht die Möglichkeit, daß das Klemmstück in den Stützfuß eintauchen kann und genügend Bewegungsfreiheit beim Festklemmvorgang zur Verfügung steht. Hierdurch wird zwischen Dachkonstruktion und Türrahmen der Platzbedarf verringert.

Um den Platzbedarf zwischen Dach und Türrahmen möglichst gering zu halten, kann in weiterer Ausgestaltung der Erfindung die Befestigungsschraube einen flachen Senkkopf aufweisen, der mit einem angepaßten konischen Sitz im Klemmstück zusammenwirkt.

Die Erfindung wird nachstehend anhand von in den Zeichnungen dargestellten Ausführungsbeispielen näher erläutert.

In den Zeichnungen zeigen:
- Fig. 1: : eine Seitenansicht eines Teiles eines Kraftfahrzeuges mit zwei Tragholmen eines Dachgepäckträgers;
- Fig. 2: : eine schaubildliche Ansicht eines Stützfusses mit einer ersten Ausführungsform einer Stützfußbefestigung;
- Fig. 3: : eine Vorderansicht dieses Stützfusses nach Fig. 2;
- Fig. 4: : einen Schnitt nach der Linie IV - IV in Fig. 3;
- Fig. 5: : einen Schnitt nach der Linie V - V in Fig. 3;
- Fig. 6: : eine schaubildliche Darstellung eines Stützfusses mit einer zweiten Ausführungsform einer Stützfußbefestigung;
- Fig. 7: : eine Ansicht des Stützfusses nach Fig. 6;
- Fig. 8: : einen Schnitt nach der Linie VIII - VIII in Fig. 7;
- Fig. 9: : einen Schnitt nach der Linie IX - IX in Fig. 7;

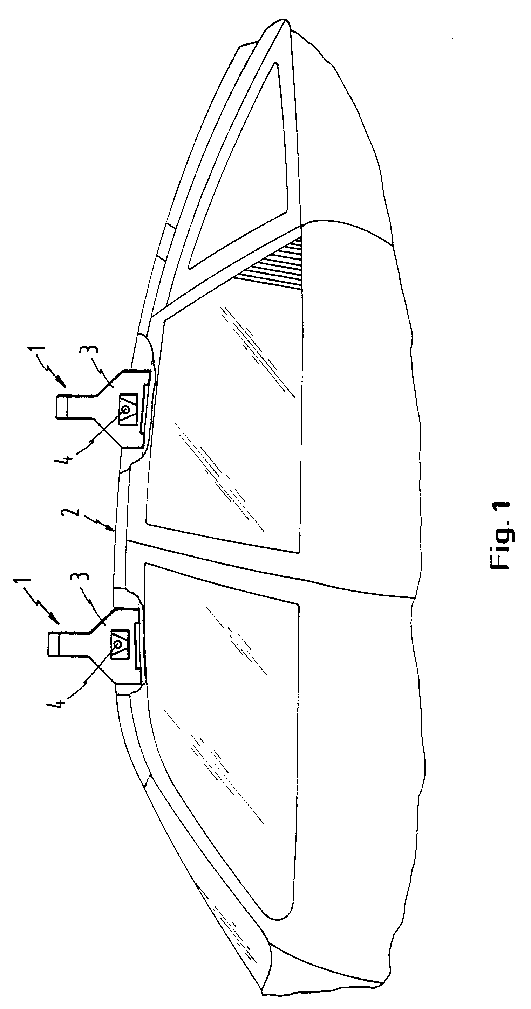

Fig. 1 zeigt die Anordnung zweier Tragholme 1 am Dach 2 einer Kraftfahrzeugkarosserie, wobei die Türrahmen im Bereich der Befestigungsstellen dieser Tragholme aufgebrochen gezeichnet sind. Dabei ist erkennbar, daß die Tragholme 1 mit ihren Stützfüssen 3 am Dach 2 der Kraftfahrzeugkarosserie mittels Schrauben 4 befestigt sind.

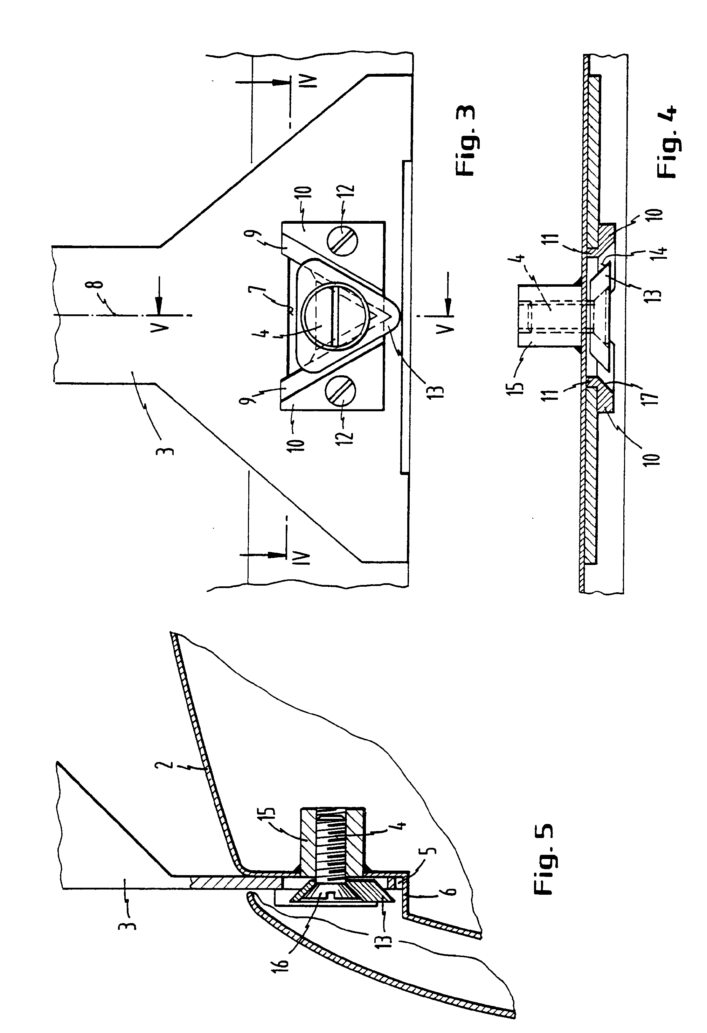

Wie aus den Fig. 5 und 9 ersichtlich, ist der Stützfuß 3 mit seinen Stützansätzen 5 auf der Dachrinne 6 der Kraftfahrzeugkarosserie abgestütz.

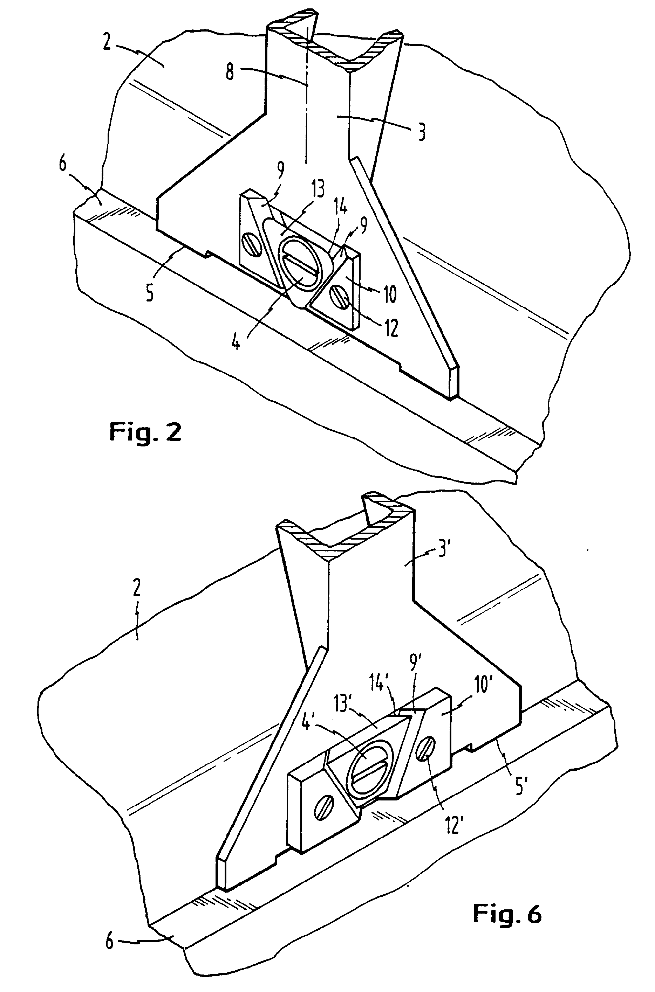

Symmetrisch in bezug auf seine Längsachse weist der Stützfuß 3 eine Öffnung 7 in Form eines dreieckförmigen Ausschnittes auf, an deren beiden symmetrisch zur Längsachse 8 des Stützfußes gelegenen Rändern Stützflächen 9 vorgesehen sind, die an Klemmklötzen 10 ausgebildet sind. Die Klemmklötze 10 greifen mit jeweils einem Ansatz 11 formschlüssig in die Öffnung 7 des Stützfußes 3 ein und sind jeweils mit einer asymmetrisch in bezug auf den jeweiligen Klemmklotz 10 angeordneten Schraube 12 am Stützfuß befestigt. Die Stützflächen 9 schließen einen Winkel von 60° zueinander ein und laufen symmetrisch in bezug auf die Symmetrielinie 8 des Stützfußes 3 in Richtung auf dessen Ende aufeinander zu. Diese Stützflächen 9 sind auch nach außen geneigt, d. h. divergierend angeordnet, so daß sie einen konisch zulaufenden Sitz für ein Klemmstück 13 bilden, das bei der Ausführungsform nach den Fig. 2 bis 5 symmetrisch nach Art eines glichseitigen Dreiecks ausgebildet. An sämtlichen drei Seiten weist das Klemmstück konisch zueinander zulaufende Klemmflächen 14 auf, die in ihrer Neigung den Stützflächen 9 angepaßt sind. Aufgrund der symmetrischen Ausgestaltung weist das Klemmstück 13 keine bevorzugte Einbaulage auf. Dieses Klemmstück 13 wird mittels der Befestigungsschraube 4, die in eine auf der Innenseite des Dachbleches 2 angeordnete Gewindebuchse 15 einschraubbar ist, gegen die Klemmklötze 10 gedrückt. Die Befestigungsschraube 4 weist einen flachen Senkkopf 16 auf, der mit einem konischen Sitz 17 im Klemmstück 13 zusammenwirkt. Aufgrund der divergierenden Anordnung der Stützflächen 9 wird der Stützfuß fest gegen das Dachblech 2 gedrückt wird. Wegen der nach unten aufeinander zulaufenden Stützflächen 9 wird der Stützfuß 3 mit seinen Stützansätzen 5 gegen die Regenrinne 6 gedrückt, wodurch ein besonders fester Halt des Stützfußes 3 am Dach der Kraftfahrzeugkarosserie erzielt wird.

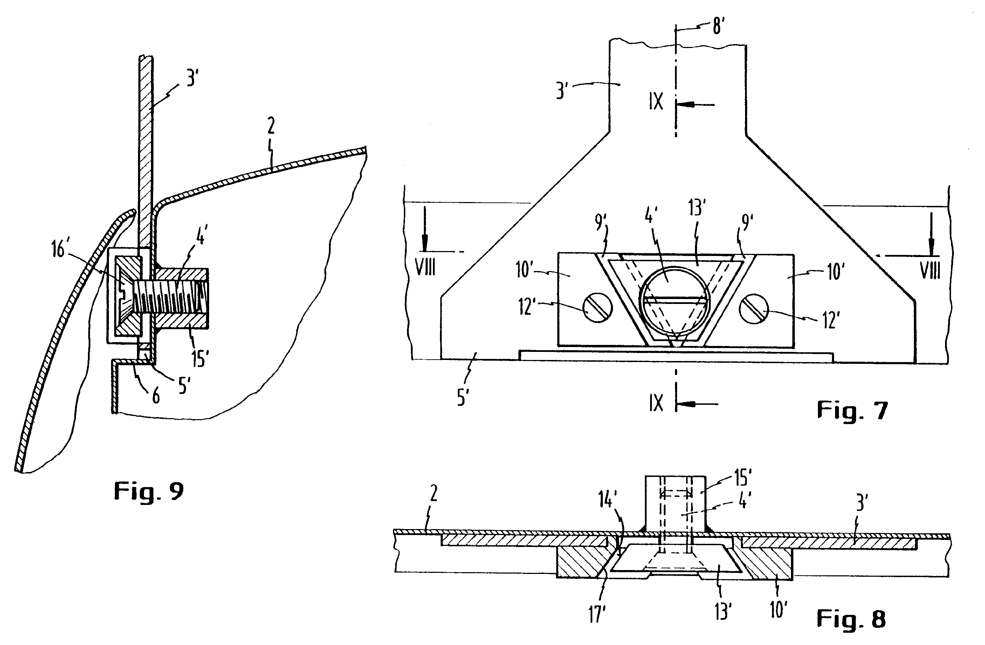

Bei der Ausführungsform nach den Fig. 6 bis 9 kommt das gleiche Grundprinzip zur Anwendung. Aus diesem Grunde sind vergleichbare Teile mit dem gleichen Bezugszeichen jedoch mit einem zusätzlichen Strich versehen. Der Unterschied zur Ausgestaltung nach den Fig. 2 bis 5 besteht darin, daß das Klemmstück 13' nach den Fig. 6 bis 9 nicht symmetrisch ist und nur an seinen beiden Seitenrändern Klemmflächen 14' aufweist, die mit den Klemmflächen 9' der Klemmklötze 10' zusammenwirken. Die Klemmflächen 9' laufen unter einem größeren Winkel aufeinander zu, als dies bei der Ausführungsform nach den Fig. 2 bis 5 der Fall ist.

## Patentansprüche

1. Befestigung eines Stützfußes eines Dachgepäckträgers bei einer Kraftfahrzeugkarosserie mit Regenrinne und einer Gewindebuchse im Dachblech für die Befestigung des Dachgepäckträgers mittels einer Schraube (4), **dadurch gekennzeichnet,** daß am Stützfuß (3) beiderseits einer für die Schraube (4) vorgesehenen Stützfußöffnung (7) zwei einander gegenüberliegende symmetrisch in bezug auf die Stützfußlängsachse (8) ausgerichtete, auf das Stützfußende aufeinander zulaufende und ausgehend vom Stützfuß nach außen divergierende Stützflächen (9) vorgesehen sind und daß ein von der Befestigungsschraube (4) nach Art einer Beilegscheibe durchsetztes Klemmstück (13) vorgesehen ist, das an seinen Rändern mit den Stützflächen (9) sowohl in Richtung als auch Neigung angepaßten Klemmflächen (14) versehen ist, die in der Betriebsstellung auf den zugeordneten Stützflächen (9) aufliegen.

2. Befestigung nach Anspruch 1, **dadurch gekennzeichnet,** daß die Stützflächen (9) an Klemmklötzen (10) ausgebildet sind, die an gegenüberliegenden Seiten der Stützfußöffnung (7) am Stützfuß (3) befestigt sind.

3. Befestigung nach Anspruch 2, **dadurch gekennzeichnet,** daß die Klemmklötze (10) mit der Dicke des Stützfußes (3) angepaßten Ansätzen (11) in die Stützfußöffnung (7) eingreifen.

4. Befestigung nach Anspruch 3, **dadurch gekennzeichnet,** daß die Klemmklötze (10) mittels einer außerhalb der Symmetrielinien des Klemmklotzes angeordneten Schraube (12) oder Niete befestigt sind, wobei die Ansätze (11) an den Rändern der Stützfußöffnung (7) anliegen.

5. Befestigung nach einem der Ansprüche 1 bis 4, **dadurch gekennzeichnet,** daß die Stützflächen (9) in Richtung auf das Stützfußende einen Winkel von 60° untereinander einschließen.

6. Befestigung nach Anspruch 5, **dadurch gekennzeichnet,** daß das Klemmstück (13) drei Klemmflächen (14) mit in Umfangsrichtung des Klemmstückes gleicher Längenausdehnung aufweist, die untereinander jeweils einen Winkel von 60° einschließen.

7. Befestigung nach einem der Ansprüche 1 bis 6, **dadurch gekennzeichnet,** daß die Fläche der Stützfußöffnung (7) größer als die Fläche des Klemmstückes (13) in Draufsicht ist und in der Betriebsstellung die Ränder der Sützfußöffnung (7) parallel zu den Rändern des Klemmstückes (13) verlaufen

8. Befestigung nach einem der Ansprüche 1 bis 7, **dadurch gekennzeichnet,** daß die Befestigungsschraube (4) einen flachen Senkkopf (16) aufweist, der mit einem angepaßten konischen Sitz (17) im Klemmstück (13) zusammenwirkt.

## Claims

1. Mounting of a support leg of a roof rack in a motor vehicle body with a drip moulding and a threaded bush in the roof panel for mounting the roof rack by means of a screw (4), characterised in that two opposing supporting surfaces (9) arranged symmetrically with respect to the longitudinal axis (8) of the support leg, running together to the end of the support leg and diverging outwards starting from the support leg are provided on the support leg (3) on either side of a support leg opening (7) provided for the screw (4), and that a clamping piece (13) traversed by the fastening screw (4) in the manner of a washer is provided, the said clamping piece being provided at its edges with clamping surfaces (14) which match both the direction and inclination of the supporting surfaces (9) and rest against the associated supporting surfaces (9) in the operating position.

2. Mounting according to claim 1, characterised in that the supporting surfaces (9) are formed on clamping blocks (10) which are secured to the support leg (3) on opposing sides of the support leg opening (7).

3. Mounting according to claim 2, characterised in that the clamping blocks (10) engage the support leg opening (7) by means of projections (11) matching the thickness of the support leg (3).

4. Mounting according to claim 3, characterised in that the clamping blocks (10) are secured by means of a screw (12) or rivet. arranged outside the lines of symmetry of the clamping block, the projections (11) resting against the edges of the support leg opening (7).

5. Mounting according to one of claims 1 to 4, characterised in that the supporting surfaces (9) include an angle of 60° in the direction of the end of the support leg.

6. Mounting according to claim 5, characterised in that the clamping piece (13) has three clamping surfaces (14) having the same linear extension in the circumferential direction of the clamping piece, each pair including an angle of 60°.

7. Mounting according to one of claims 1 to 6, characterised in that the surface of the support leg opening (7) is larger than the surface of the clamping piece (13) when viewed from the top and that the edges of the support leg opening (7) extend parallel to the edges of the clamping piece (13) in the operating position.

8. Mounting according to one of claims 1 to 7, characterised in that the fastening screw (4) has a flat countersunk head (16) which cooperates with a matching conical seat (17) in the clamping piece (13).

## Revendications

1. Fixation d'un pied d'appui d'une galerie porte-bagages dans le cas d'une carrosserie de véhicule automobile avec gouttière et avec une douille taraudée dans la tôle de toiture pour la fixation de la galerie porte-bagages au moyen d'une vis (4), caractérisée en ce qu'il est prévu sur le pied d'appui (3), des deux côtés une ouverture du pied d'appui (7) prévue pour la vis (4), deux surfaces d'appui (9) situées l'une en face de l'autre symétriquement par rapport à l'axe longitudinal (8) du pied d'appui, qui vont l'une vers l'autre en direction de l'extrémité du pied d'appui et qui, à partir du pied d'appui, divergent vers l'extérieur, et en ce qu'il est prévu une pièce de blocage (13) traversée par la vis de fixation (4) à la manière d'une rondelle de calage, cette pièce de blocage étant munie sur ses bords de surfaces de blocage (14) adaptées aux surfaces d'appui (9) aussi bien quant à la direction que quant à l'inclinaison et qui, en position d'utilisation, sont appliquées contre les surfaces d'appui (9) correspondantes.

2. Fixation selon la revendication 1, caractérisée en ce que les surfaces d'appui (9) sont formées sur les blocs de serrage (10) qui sont fixés au pied d'appui (3) sur les côtés opposés de l'ouverture de pied d'appui (7).

3. Fixation selon la revendication 2, caractérisée en ce que les blocs de serrage (10) viennent en prise avec des saillies (11), dans l'ouverture de pied d'appui (7), adaptées à l'épaisseur du pied d'appui (3).

4. Fixation selon la revendication 3, caractérisée en ce que les blocs de serrage (10) sont fixés au moyen d'une vis (12) ou d'un rivet disposé à l'extérieur des bissectrices du bloc de serrage, les saillies (11) portant contre les bords de l'ouverture de pied d'appui (7).

5. Fixation selon l'une quelconque des revendications 1 à 4, caractérisée en ce que les surfaces d'appui (9) définissent entre elles, en direction de l'extrémité du pied d'appui, un angle de 60°.

6. Fixation selon la revendication 5, caractérisée en ce que la pièce de blocage (13) présente trois surfaces de blocage (14) ayant une étendue identique en longueur dans le sens de la périphérie de la pièce de blocage, et définissant entre elles chaque fois un angle de 60°.

7. Fixation selon l'une quelconque des revendications 1 à 6, caractérisée en ce que la surface de l'ouverture de pied d'appui (7) est supérieure à la surface de la pièce de blocage (13), en vue de dessus, et en ce que, en position d'utilisation, les bords de l'ouverture de pied d'appui (7) s'étendent parallèlement aux bords de la pièce de blocage (13).

8. Fixation selon l'une quelconque des revendications 1 à 7, caractérisée en ce que la vis de fixation (4) présente une tête fraisée plate (16) qui coopère avec un logement conique (17) adapté dans la pièce de blocage (13).
